**Europäisches Patentamt**

**European Patent Office**

**Office européen des brevets**

(19)

(11) Veröffentlichungsnummer: **0 151 237**

**B1**

(12) **EUROPÄISCHE PATENTSCHRIFT**

(45) Veröffentlichungstag der Patentschrift:
03.02.88

(51) Int. Cl.⁴: **F 24 J 3/00,** F 25 B 15/00,
F 25 B 29/00

(21) Anmeldenummer: 84113504.9

(22) Anmeldetag: 06.11.84

(54) Kontinuierlich wirkende Sorptionsapparate und Verfahren zu deren Betrieb.

(30) Priorität: 28.11.83 DE 3342985

(43) Veröffentlichungstag der Anmeldung:
14.06.85 Patentblatt 85/33

(45) Bekanntmachung des Hinweises auf die Patenterteilung:
03.02.88 Patentblatt 88/5

(84) Benannte Vertragsstaaten:
AT BE CH FR GB IT LI LU NL SE

(56) Entgegenhaltungen:
DE-A-2 166 538
DE-A-3 207 761
FR-A-1 026 983
GB-A-2 057 113
US-A-4 169 362
US-A-4 341 088

SOVIET INVENTIONS ILLUSTRATED, Sektion P,Q,
910,933-945, 311; Wocke K21, 6. Juli 1983, SU-Q7,
Lighting; Heating, Seite 13
SOVIET INVENTIONS ILLUSTRATED, Sektion P,Q,
202,182-939, 768; Wocke K18, 15. Juni 1983, SU-Q7,
Lighting; Heating, Seite 7

(73) Patentinhaber: Kaubek, Fritz, Dipl.- Ing.,
Herbststrasse 14, D-8035 Gauting (DE)
Patentinhaber: Maier- Laxhuber, Peter, Dr.,
Saumweberstrasse 14, D-8000 München 60 (DE)

(72) Erfinder: Kaubek, Fritz, Dipl.- Ing., Herbststrasse
14, D-8035 Gauting (DE)
Erfinder: Maier- Laxhuber, Peter, Dr.,
Saumweberstrasse 14, D-8000 München 60 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft einen Sorptionsapparat gemäß dem Oberbegriff des Patentanspruchs 1, sowie ein Verfahren zu dessen Betrieb.

Mit Sorptionsapparaten kann Wärme von einem ersten Wärmeträger auf einen zweiten, der sich auf höherer Temperatur befindet übertragen werden. Die Sorptionsapparate werden in kontinuierliche und periodische Systeme unterteilt. In beiden Systemen wird ein Arbeitsmittel exotherm in einem Sorptionsmittel sorbiert und in einer endothermen Reaktion wieder desorbiert.

Mit festen, nicht pumpfähigen Sorptionsstoffen sind nur periodische Verfahren möglich. In einem gasdichten Sorptionsbehälter befindet sich in einer Zone, der Kocheradsorber-Zone ein mit Arbeitsmittel beladener Sorptionsstoff. Durch äußere Wärmezufuhr, dem Kochen, wird das Arbeitsmittel aus dem Sorptionsstoff desorbiert. In einer von außen gekühlten Zone des Sorptionsbehälters, der Kondensatorverdampfer-Zone, kann das Arbeitsmittel unter Wärmeabgabe kondensieren. Die freiwerdende Wärme wird durch die Wände der Kondensatorverdampfer-Zone an einen Wärmeträger übertragen. Um das System wieder in den Ausgangszustand zurückzuf'uhren, wird die Kocheradsorber-Zone gekühlt. Der Sorptionsstoff vermag dadurch wieder das vorher ausgekochte Arbeitsmittel zu sorbieren. Durch die exotherme Reaktion wird Sorptionswärme frei, die von dem außerhalb der Kocheradsorber-Zone befindlichen Wärmeträger aufgenommen wird. Das Arbeitsmittel verdampft in der Kondensatorverdampfer-Zone bei tieferen Temperaturen unter Wärmeaufnahme aus einem weiteren Wärmeträger. Der Arbeitsmitteldampfdruck im Sorptionsbehälter und die Arbeitsmittelkonzentration im Sorptionsmittel sind nur von den Temperaturniveaus der Wärmeträger abhängig und passen sich dem nach jeder äußeren Veränderung dieser Temperaturniveaus entsprechend ihrer Reaktionskinetik mehr oder weniger schnell an.

Die US-4 169 362 beschreibt einen quasi-kontinuierlich arbeitenden Sorptionsapparat, bei dem mehrere periodisch arbeitende Sorptionsbehälter radial um eine Drehachse angeordnet sind. Durch Drehen um diese Drehachse werden die Sorptionsbehälterzonen nacheinander mit Wärmeträgerströmen passender Temperaturniveaus in Kontakt gebracht. Die periodische Arbeitsweise der Einzelsorptionsbehälter wird somit zu einem kontinuierlichen Prozessablauf erweitert.

Der innere Aufbau und die Anordnung der Sorptionsbehälter führen in der oben genannten Anordnung zu einer Reihe von technisch nur schwierig zu lösenden Problemen. So läßt sich beispielsweise eine sichere Trennung der einzelnen Wärmeträgerströme auch mit großem technischen Aufwand nur unzureichend lösen.

Durch hohe Wärmeleitungs- und Wärmestrahlungsverluste bleibt der erzielbare Wirkungsgrad unbefriedigend.

Aufgabe der vorliegenden Erfindung ist es, einen verbesserten, quasi-kontinuierlichen Sorptionsapparat zu schaffen. Gelöst wird diese Aufgabe durch den kennzeichnenden Teil des Patentanspruches 1. Die Sorptionsbehälter sind also so um die Drehachse angeordnet, daß bei der Drehung alle Kocheradsorber-Zonen innerhalb eines ersten Rotationskörpers und alle Kondensatorverdampfer-Zonen innerhalb eines zweiten, vom ersten Rotationskörper nicht durchdrungenen Rotationskörpers liegen. Die Rotationskörper werden dabei von getrennten Wärmeträgern, die in separaten Strömungssegmenten geführt werden, durchströmt. Bei einer vollen Umdrehung um die Drehachse durchlaufen somit alle Zonen die für einen Gesamtzyklus notwendigen Temperaturniveaus in der richtigen Reihenfolge. Die Wärmeträgerströme nehmen beim Durchströmen der einzelnen Strömungssegmente Wärmen von den passierenden Sorptionsbehälterzonen auf oder geben Wärmen an diese ab.

Eine komplizierte Regelung und Steuerung der für den Prozeß benötigten Wärmeträgerströme kann somit entfallen. Die gesamte Wärmeträgerregelung wird von der Drehbewegung, die die richtigen Sorptionsbehälterzonen durch die richtigen Strömungselemente führt, übernommen. Eine Anpassung an schwankende Temperaturniveaus oder Volumenströme der Wärmeträger übernimmt das verwendete Sorptionsstoffpaar völlig selbstregulierend durch Änderungen im Dampfdruck des Arbeitsmittels und durch Änderung der Konzentration im Sorptionsstoff.

Wenn die Drehachse waagerecht gelagert ist und die Strömungssegmente richtig plaziert sind, gelingt es, durch eine Gewichtsverlagerung des Arbeitsmittels, das in der einen Rotationskörperhälfte zur Drehachse und auf der anderen Hälfte von der Drehachse weg nach außen strömt, ein Drehmoment zu induzieren, das die Sorptionsbehälter in Drehung versetzt.

Besonderes gut geeignet ist der Sorptionsstoff Zeolith, der im Zusammenwirken mit dem Arbeitsmittel Wasser sowohl Verdampfungstemperaturen um 0°C als auch Kochertemperaturen über 350°C zuläßt. Die erreichbaren Temperaturhübe liegen dabei über 100°C. Die Reaktionsgeschwindigkeiten und die Zyklenstabilität sind ungewöhnlich hoch. Weitere vorteilhafte Eingeschaften sind eine ungeschränkte Verfügbarkeit, eine aißergewöhnlich gute Umweltverträglichkeit und ein niedriger Herstellungspreis. Das Arbeitsmittel Wasser gefriert bei Temperaturen unter 0°C. Für bestimmte Anwendungsfälle erscheint dies nachteilig. Richtig eingesetzt kann jedoch der Phasenübergang fest-flüssig in der Funktion eines zusätzlichen Latentwärmespeichers vorteilhaft genutzt werden. Phasenübergänge durch Expansionsverdampfung des Arbeitsmittels führen zu keiner Volumenausdehnung. Die Kombination des Sorptionsstoffes Zeolith in den Kocheradsorber-Zonen mit einem weiteren Sorptionsstoff für Wasser in den Kondensatorverdampfer-Zonen, z. B. Bentonit, Salz oder Aktivkohle, erlaubt einen lage- und erschütterungsunabhängigen Einsatz der Sorptionsapparate. Die Nullgradgrenze ist damit ebenfalls aufgehoben. Für den Einsatz zweier verschiedener Metallhydride als Sorptionsstoffe und Wasserstoff als Arbeitsmittel gelten ähnliche Vorteile. Die Reaktionswärmen der Sorptionsreaktionen sind hier höher, ebenso die Sorptionsbehälterdrücke.

In einer weiteren Ausgestaltung der Erfindung sind auf die Außenflächen der Sorptionsbehälter ebenfalls Sorptionsstoffe für Wasser aufgebracht. Für den Einsatz der Sorptionsapparate in Klimaanlagen ist dies von besonderem Vorteil. Um Luftströme zu entfeuchten, muß in diesen Fällen die Verdampfungstemperatur des Arbeitsmittels in den Kondensatorverdampfer-Zonen nicht unterhalb des Taupunktes des Luftstromes liegen. Die Reaktionswärme, die bei der Sorption der Luftfeuchtigkeit im Sorptionsstoff freigesetzt wird, wird umgehend von der Kondensatorverdampfer-Zone aufgenommen und über das Arbeitsmittel in die Kocheradsorber-Zone transportiert. Luftströme können also in einem Schritt sowohl entfeuchtet als auch gekühlt oder erwärmt werden.

In der Regel werden zum Transport der Wärmeträger Pumpen und Ventilatoren eingesetzt. Über geeignete Übersetzungen können die hierfür nötigen Antriebsmotoren auch die Drehbewegungen der Sorptionsbehälter mit übernehmen. Gerade für den Einsatz in Kraftfahrzeugen wird die dadurch mögliche Gewichts- und Kostenreduktion von Vorteil sein.

Während einer Umdrehung durchlaufen alle Kocheradsorber-Zonen der Reihe nach Strömungssegmente des ersten Rotationskörpers für die Funktionen Kochen, Abkühlen, Sorbieren und Erwärmen, während phasengleich alle Kondensatorverdampfer-Zonen entsprechender Sorptionsbehälter, Strömungssegmente des zweiten Rotationskörpers für die Funktionen Kondensieren, Abkühlen, Verdampfen und Erwärmen durchwandern. Die Strömungssegmente für die Funktionen Abkühlen und Erwärmen sind für den erfindungsgemäßen Betrieb nicht notwendig. Auf sie kann in vereinfachten Sorptionsapparaten verzichtet werden. Läßt man allerdings nach der Lehre des Patentanspruchs 10 zwischen diesen Strömungssegmenten einen Wärmeträger zum Wärmetausch zirkulieren, können die erreichbaren Wärmeverhältnisse der Sorptionsapparate stark erhöht werden. Die spezifischen Wärmekapazitäten der Sorptions- und Arbeitsstoffe sowie der Sorptionsbehälter lassen sich auf diese Weise äußerst vorteilhaft umschichten. Das Ergebnis sind höhere Nutzwärme bzw. Nutzkälteströme bei verringertem Einsatz von Kocherwärme.

Die Drehbewegung der Sorptionsbehälter durch die Strömungssegmente erlaubt bei geeigneter Strömungsführung der Wärmeträger (z. B. durch Strömungsumlenkung oder Mehrfachpassagen) gleitende Temperaturen sowohl in den Sorptionsbehältern als auch in den Wärmeträgern selbst. Die Temperaturgradienten innerhalb der Strömungssegmente lassen sich damit vorteilhaft für eine weitestgehende Abkühlung bzw. Aufheizung der Wärmeträger nutzen.

Besonders der Wärmeinhalt heißer Verbrennungsgase läßt sich in den Strömungssegmenten für die Funktion Kochen und/oder Erwärmen auf diese Weise bis auf das Sorptionstemperaturniveau ausschöpfen. Wenn diese Verbrennungsgase nachher noch die Strömungssegmente des zweiten Rotationskörpers für die Funktionen Erwärmen und/oder Verdampfen durchströmen, kann der Wärmeinhalt noch stärker, als dies in den sogenannten "Brennwertgeräten" geschieht, ausgenutzt werden. Gleichzeitig lassen sich durch die weite Abkühlung umweltbeeinträchtigende Verunreinigungen besser abtrennen. Besonders vorteilhaft kann es auch sein, wenn ein Wärmeträger gleichzeitig mehrere Strömungssegmente für unterschiedliche Funktionen durchströmt, beispielsweise Kühlluft durch die Strömungssegmente Abkühlen, Sorbieren, Erwärmen, Verdampfen und Abkühlen. Auf eine Abgrenzung dieser Strömungssegmente untereinander kann dann natürlich verzichtet werden. Auf dem Weg zu einfachen, preiswerten und leichten Sorptionsapparate bedeutet dies einen entscheidenden Schritt.

Die Drehfrequenz der Sorptionsbehälter kann nach den Temperaturen einzelner Wärmeträgerströme oder nach den Temperaturen der Sorptionsbehälter bzw. deren Inhalt geregelt werden. Man erreicht auf diese Weise im ersten Fall z. B. gleichbleibende Austrittstemperaturen einzelner Wärmeträgerströme, unabhängig von den wechselnden Eintrittstemperaturen oder Volumenströme der anderen Wärmeträger. Im zweiten Fall kann eine Überhitzung einzelner Sorptionsbehälter ausgeschlossen werden oder aber ein besonders günstiger Betriebspunkt für das verwendete Sorptionsstoffpaar eingehalten werden.

Die Temperaturen der austretenden Wärmeträger lassen sich auch durch Verschieben der zugehörigen Strömungssegmente bezüglich der restlichen Strömungssegmente regeln. So läßt sich beispielsweise durch die Verschiebung des Strömungssegmentes für die Funktion Verdampfen an die Position des Strömungssegmentes für die Funktion Kondensieren die Austrittstemperatur des Wärmeträgerstromes von "kalt" auf "warm" ändern. Für den Sorptionsapparat ist durch diese Verschiebung eine Änderung in der Betriebsweise erfolgt, aus einem Kühlapparat ist eine Wärmepumpe geworden.

Durch Klappenumstellungen in den Wärmeträgerströmungskanälen kann ein Sorptionsapparat sowohl zum Heizen als auch zum Kühlen verwendet werden. Da der Sorptionsappaarat während des Betriebes gleichzeitig "kühlt" und "heizt", können auch beide Luftströme gleichzeitig eingesetzt werden. Es gelingt somit beispielsweise die sonnenbeschienene Seite eines Raumes zu Kühlen und die der Sonne abgewandte Seite zu Heizen. Selbstverständlich sind auch alle Formen der Wärmerückgewinnung und des Umluftbetriebes möglich. In Kraftfahrzeugen können somit durch den Einbau einfachster Sorptionsapparate die bislang verwendeten Warmwasser-Heizsysteme und die mit mechanischer Energie angetriebenen Kompressor-Klimaanlagen ersetzt werden. Eine Entfeuchtung der Zuluft ist nach der Lehre des Anspruchs 4 ohne zusätzlichen Aufwand vorteilhaft durchzuführen. Neben Einsparungen im Kraftstoffverbrauch, kann durch Weglassen des konventionellen Heizsystems auch das Fahrzeuggewicht reduziert werden. Eine weitere Gewichts- und Kostenersparnis kann eintreten, wenn das Strömungssegment für die Funktion Kochen die Aufgabe eines Schalldämpfers in der Auspuffanlage mitübernehmen kann. Ein zusätzlicher Auspufftopf kann dann nämlich entfallen. Besonderes vorteilhaft erscheint auch die Tatsache, daß die mit Abgas in Berührung stehenden Kocheradsorber-Zonen mit den Zuluftströmen in den Fahrzeuginnenraum nicht in Kontakt kommen.

Die Patentansprüch 12-16 beschreiben Sorptionsapparate zu Verwendung als Wärmetransformator und Wärmetauscher. Beim der Verwendung als regenerativer Wärmetauscher ähnelt die Betriebsweise denen bekannter "Rotor"'-Wärmetauscher. Als rekuperativer Wärmetauscher betrieben, können Verschmutzungen der Abluftströme nicht in die Zuluftströme gelangen.

Besonders vorteilhaft lassen sich die Sorptionsapparate in Klimaanlagen mit Wärmerückgewinnung aus der Abluft einsetzen. Zu bestimmten Zeitabschnitten ist in derartigen Anlagen ein einfacher Wärmetausch zwischen Zu- und Abluft ausreichend. Bei höherem Wärme- oder Kühlbedarf der Anlage kann durch einfaches Zuschalten einer äußeren Wärmequelle (z. B. Öl oder Gasbrenner) der Sorptionsapparat als Wärmepumpe oder Kühlapparat arbeiten. Vielfach wird diese Änderung sogar ohne zusätzliche Klappenumstellungen in den Lüftungskanälen möglich sein. Allein die Temperaturniveaus der Wärmeträger entscheiden über die Funktionsweise des Sorptionsapparates. Das Sorptionsstoffpaar in den Sorptionsbehältern paßt sich jeder Veränderung selbständig an.

Durch eine besondere Ausbildung und Anordnung der Sorptionsbehälter gelingt es, die Sorptionsapparate weiter zu vereinfachen. Um eine mögliche Durchmischung einzelner Wärmeträgerströme innerhalb der Rotationskörper auszuschließen und einen hohen Druckabfall sowohl für das Arbeitsmittel im Innern der Sorptionsbehälter als auch für die Wärmeträger außerhalb der Sorptionsbehälter zu vermeiden, sind die Sorptionsbehälter als identische, flache, keilförmige Gefäße mit gleichmäßigen Begrenzungskanten ausgebildet. Eine Abdichtung der Strömungssegmente untereinander und gegen den Außenraum gelingt mit Hilfe erprobter Verfahren aus der "Rotor"-Wärmetauscher-Technologie. Werden die Sorptionsbehälterwände gegen die Strömungsrichtung der Wärmeträger angestellt, gelingt es, eine Drehbewegung der Sorptionsbehälter ohne zusätzliche Vorrichtungen zu erreichen.

Als Sorptionsstoff eignen sich prinzipiell alle Stoffe, die im Vergleich zum verwendeten Arbeitsmittel einen geringeren Dampfdruck besitzen und für die sorbierte Arbeitsmittelmenge eine ausreichende Dampfdruckerniedrigung gewährleisten. In Frage kommen hier natürlich alle aus der Kältetechnik bekannten Alkali- und Erdalkalisalze, Bentonite, Kieselgele und Aktivkohlen. Mit den Arbeitsmitteln Wasser, Methanol und Ammoniak ergeben diese Sorptionsstoffe ausreichende Sorptionseigenschaften.

Ausführungsbeispiele der Erfindung werden in der Zeichnung dargestellt und im folgenden näher beschrieben.

Es zeigt

Fig. 1 einen Sorptionsbehälter im Schnitt,

Fig. 2 einen Sorptionsapparat mit Sorptionsbehältern und Strömungssegmenten,

Fig. 3 eine weitere Anordnung der Sorptionsbehälter um die Drehachse und

Fig. 4 einen Schnitt durch einen Sorptionsapparat zum wahlweisen Heizen und/oder Kühlen eines Kraftfahrzeuges.

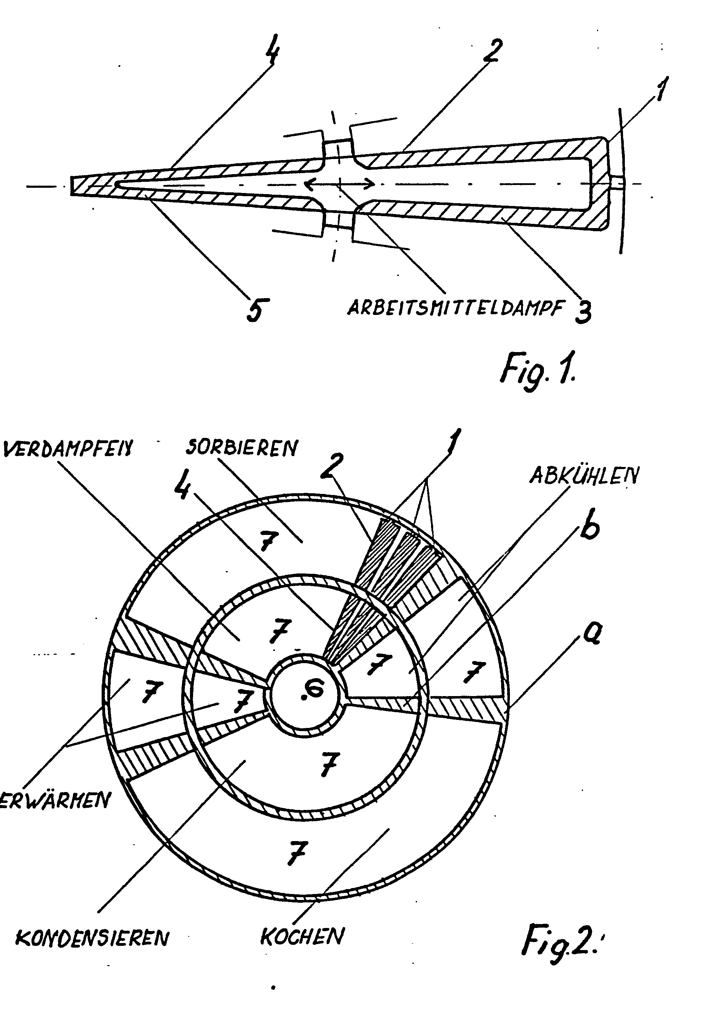

Fig. 1 zeigt einen Sorptionsbehälter 1 im Schnitt. Er besteht hier aus zwei, in Tiefziehverfahren hergestellten und nach der Füllung verschweißten Halbschalen aus Metall oder Glas. Die Kocheradsorber-Zone 2 enthält einen ersten Sorptionsstoff 3. In der Mitte erlauben Dampfkanäle eine bessere Verteilung des Arbeitsmitteldampfes. Die Kondensatorverdampfer-Zone 4 enthält einen zweiten Sorptionsstoff 5.

In Fig. 2 sind mehrere Sorptionsbehälter 1 kreisförmig und in radialer Richtung um eine Drehachse 6 angeordnet. Alle Kocheradsorber-Zonen 2 liegen dadurch bei der Drehbewegung um die Drehachse 6 innerhalb eines ersten Rotationskörpers (a), alle Kondensatorverdampfer-Zonen 4 innerhalb eines zweiten Rotationskörpers (b). In den feststehenden Rotationskörpern (a) und (b) sind Strömungssegmente 7 offen gelassen, durch die Wärmeträger unterschiedlicher Temperaturen strömen können. Bei einer Umdrehung der Sorptionsbehälter, 1 um die Drehachse 6 werden alle Strömungssegmente 7 durchlaufen, und zwar die Strömungssegmente 7 für die Funktionen Kochen, Abkühlen, Sorbieren und Erwärmen von den Kocheradsorber-Zonen und die Strömungssegmente 7 für die Funktionen Kondensieren, Abkühlen, Verdampfen und Erwärmen von den Kondensatorverdampfer-Zonen 4.

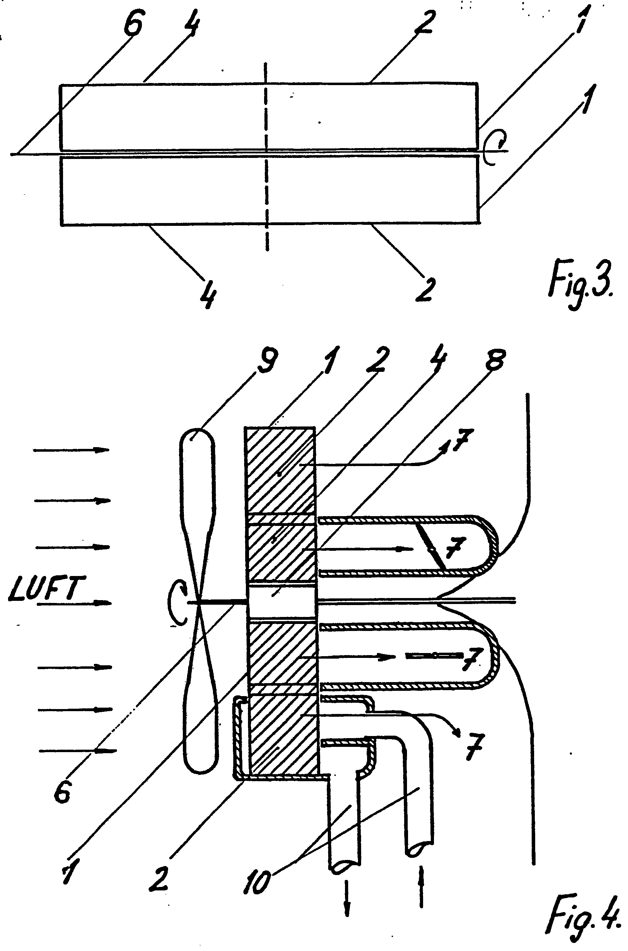

Die Fig. 3 zeigt eine weitere Anordnungsmöglichkeit der Sorptionsbehälter 1 um die Drehachse 6, wobei die Sorptionsbehälter 1 in axialer Richtung angeordnet sind. Die Ausgestaltung und die Anordnung der Sorptionsbehälter 1 kann dabei den Einsatzgegebenheiten weitestgehend angepaßt werden.

Die Fig. 4 zeigt einen Schnitt durch einen Sorptionsapparat in der Betriebsweise eines Klima- und Heizgerätes für Kraftfahrzeuge. Auf der Drehachse 6 sitzt ein Elektromotor 8 mit einer Luftschraube 9. Über ein Getriebe kann dieser Elektromotor 8 die Drehbewegung der Sorptionsbehälter 1 mitübernehmen. Die Auspuffleitung 10 einen Verbrennungsmaschine ist an das Strömungselement 7 für die Funktion Kochen angeschlossen. Von den Strömungselementen 7 für die Funktionen Verdampfen, und Konensieren führen Luftkanäle mit Absperrklappen in den Fahrzeuginnenraum. Über die Stellung der Absperrklappen kann die Lufttemperatur für den Fahrzeuginnenraum geregelt werden.

**Patentansprüche**

1. Sorptionsapparat mit mindestens zwei, gasdicht verschlossenen Sorptionsbehältern (1), bestehend aus Kocheradsorberzonen (2), die mit Sorptionsstoffen gefüllt sind, und Kondensatorverdampferzonen (4), sowie einer Drehachse (6), um welche die Sorptionsbehälter (1) rotieren und dabei mindestens zwei Strömungssegmente (7) durchlaufen, dadurch gekennzeichnet, daß die Sorptionsbehälter (1) eine langgestreckte Form aufweisen, an deren einem Ende jeweils die Kondensatorverdampferzone (4) und an deren anderem Ende jeweils die Kocheradsorberzone (2) angeordnet ist, und daß die Sorptionsbehälter (1) so angeordnet sind, daß das eine Ende innerhalb eines ersten Rotationskörpers (a) und das andere Ende innerhalb eines zweiten Rotationskörpers (b), der vom ersten Rotationskörper (a) nicht durchdrungen wird, rotiert, und daß jeder Rotationskörper in mindestens zwei Strömungssegmente (7) unterteilt ist, die von den Enden der Sorptionsbehälter (1) bei jeder Umdrehung jeweils einmal durchlaufen werden und in denen jeweils nur eine Wärmezu-oder Wärmeabfuhr über jeweils ein Wärmeträgermedium erfolgt.

2. Sorptionsapparat nach Anspruch 1, dadurch gekennzeichnet, daß sich die Sorptionsbehälter (1) im wesentlichen radial zur Drehachse (6) erstrecken.

3. Sorptionsapparat nach Anspruch 1, dadurch gekennzeichnet, daß sich die Sorptionsbehälter (1) im wesentlichen axial zur Drehachse (6) erstrecken.

4. Sorptionsapparat nach Anspruch 1 oder 2, dadurch gekennzeichnet, daß die Drehachse (6) horizontal gelagert ist und die Strömungssegmente (7) zur Wärmezufuhr und zur Wärmeabfuhr bezüglich der Drehachse (6) seitlich gegenüberliegend angeordnet sind.

5. Sorptionsapparat nach einem der vorangehenden Ansprüche, dadurch gekennzeichnet, daß als Adsorptionsstoff Zeolith, wie beispielsweise Mg-A bzw. H-Y, oder Metallhydride enthalten sind.

6. Sorptionsapparat nach einem der vorangehenden Ansprüche, dadurch gekennzeichnet, daß Trocknungsmittel an den Außenflächen der Sorptionsbehälter (1) angebracht sind.

7. Sorptionsapparat nach einem der vorangehenden Ansprüche, dadurch gekennzeichnet, daß die Sorptionsbehälter (1) durch den Motor eines Ventilators und über ein Getriebe in Drehbewegung versetzt werden.

8. Sorptionsapparat nach einem der vorangehenden Ansprüche, dadurch gekennzeichnet, daß mindestens ein Wärmeträgerstrom nacheinander oder gleichzeitig mehrere Strömungssegmente (7) durchströmt.

9. Sorptionsapparat nach einem der vorangehenden Ansprüche, dadurch gekennzeichnet, daß zwei weitere Strömungssegmente zum Abkühlen bzw. Erwärmen der Sorptionsbehälterenden vorgesehen sind und daß in diesen Strömungssegmenten (7) die Sorptionsbehälterenden durch Wärmeträgerströme untereinander Wärme austauschen.

10. Sorptionsapparat nach einem der vorangehenden Ansprüche, dadurch gekennzeichnet, daß Wärmeträgerströme innerhalb der Strömungssegmente (7) gegen die Temperaturgradienten der vorbeidrehenden Sorptionsbehälterenden geleitet werden.

11. Sorptionsapparat nach einem der vorangehenden Ansprüche zur Verwendung als Heizapparat, dadurch gekennzeichnet, daß in das Strömungssegment (7), in dem den Kocheradsorberzonen (4) Wärme zugeführt wird, heiße Wärmeträgerströme geleitet werden und die Wärmeträgerströme aus den Strömungssegmenten (7), in denen von den Kondensatorverdampferzonen (4) Wärme abgegeben wird, für Heizzwecke benutzt werden.

12. Sorptionsapparat nach einem der vorangehenden Ansprüche zur Verwendung als Kühlapparat,

dadurch gekennzeichnet,

daß in das Strömungssegment (7), in dem den Kocheradsorberzonen (2) Wärme zugeführt wird, heiße Wärmeträger geleitet werden und Wärmeträgerströme aus den Strömungssegmenten (7), in denen den Kondensatorverdampferzonen (4) Wärme zugeführt wird, für Kühlzwecke benutzt werden.

13. Sorptionsapparat nach einem der Ansprüche 1-10 zur Verwendung als Wärmetransformator,

dadurch gekennzeichnet,

daß die Strömungssegmente (7), in welchen die Sorptionsbehälterenden Wärme aufnehmen mit Wärmeträgern mittlerer Temperatur gespeist werden und aus dem Strömungssegment (7), in welchem die Kocheradsorberzonen (2) Wärme abgeben, Wärmeströme mit hohen Temperaturen austreten.

14. Sorptionsapparat nach einem der Ansprüche 1-10 zur Verwendung als Wärmetauscher mit Heat-Pipe-Effekt,

dadurch gekennzeichnet,

daß abzukühlende Wärmeträgerströme durch die Strömungssegmente (7), in welchen die Sorptionsbehälterenden Wärme aufnehmen, und zu erwärmende Wärmeträgerströme durch die Strömungssegmente (7), in welchen die Sorptionsbehälterenden Wärme abgeben, geleitet werden.

15. Sorptionsapparat nach einem der Ansprüche 1-10 zur Verwendung als regenerativer Wärmetauscher,

dadurch gekennzeichnet,

daß abzukühlende Wärmeträgerströme durch die Strömungssegmente (7), in welchen die Kocheradsorberzonen (2) Wärme aufnehmen und zu erwärmende Wärmeträgerströme durch die Strömungssegmente (7), in welchen die Kondensatorverdampferzonen (4) Wärme abgeben, geletet werden.

16. Verfahren zum Betrieb eines Sorptionsapparates nach einem der vorangegehenden Ansprüche,

dadurch gekennzeichnet,

daß durch Verschieben einzelner Strömungssegmente (7) gegenüber den anderen, die Temperaturen, der aus den Strömungssegmenten (7) austretenden Wärmeträgerströme und/oder die Betriebsweise der Sorptionsapparate dahingehend geändert werden, daß gleichbleibende Austrittstemperaturen der Wärmeträgerströme bzw. bestimmte Betriebspunkte der Sorptionsbehälterzonen eingehalten werden.

**Claims**

1. Sorption device with at least two gas tight sorption vessels (1) consisting of desorber/adsorber compartments, where said compartments are filled with adsorbent material, condenser/evaporator compartments (4) as well as an axis of rotation (6) around which the sorption vessels (1) rotate through at least two flow segments (7), charactized by sorption vessels (1) of longitudinal shape with condenser/evaporator compartment (4) at one end and a desorber/adsorber compartment (2) at the other end, where the sorption vessels (1) are arranged such that one end of (1) rotates within an imaginary cylindrically symmetric volume (a) while the other end of (1) rotates within a cylindrically symmetric volume (b) and where (a) and (b) have no points in common, and where each cylindrically symmetric volume (a), (b) is subdivided into at least two flow segments (7), where said flow segments are passed by the ends of the sorption vessels (1) one time per revolution and where said flow segments are subjected to a heat input or heat removal from one heat transfer fluid each.

2. Sorption device according to claim 1, characterized by sorption vessels (1) which extend mainly in radial direction with respect to the axis of rotation (6).

3. Sorption device according to claim 1, characterized by sorption vessels (1) which extend mainly in axial direction.

4. Sorption device according to claims 1 or 2, characterized by a horizontal axis of rotation and flow segments (7) for heat input and heat removal, where said flow segments are at opposite sides of the axis of rotation.

5. Sorption device according to one of the previous claims, characterized by the use of zeolite, for example Mg-A or H-Y, respectively metal hydride.

6. Sorption device according to one of the previous claims, characterized by a drying agent on the outside surfaces of the sorption vessels (1).

7. Sorption device according to one of the previous claims, characterized by rotation of the sorption vessel (1) via a geared motor of a fan.

8. Sorption device according to one of the previous claims, characterized by at least one heat transfer fluid which flows in series or in parallel through several flow segments (7).

9. Sorption device according to one of the previous claims, characterized by two additional flow segments (7) for cooling respectively heating of the sorptions vessel ends, where the sorption vessel ends exchange heat within said additional flow segments (7).

10. Sorption device according to one of the previous claims, characterized by a flow of heat transfer medium within the flow segments (7) opposite to the temperature gradient of the sorption vessel ends rotating through said flow segments.

11. Sorption device according to one of the previous claims for application as heating device, characterized by a flow segment (7) in which heat ist transfered to the desorber/adsorber compartments (2). via a hot heat transfer medium and where the heat transfer medium coming from the flow segments (7) with heat output from the condenser/evaporator compartments (4) is used for heating purposes.

12. Sorption device according to one of the previous claims for the application as cooling device, characterized by a flow segment (7) in which heat ist transferred to the desorber/adsorber compartments (2) via a hot heat transfer medium and where the heat transfer medium coming from the flow segments (7) with heat input to the condenser/evaporator compartments (4) is used for cooling purposes.

13. Sorption device according to one of the claims 1-10 for application as heat transformer, characterized by flow segments (7) in which the sorption vessel ends take up heat from heat transfer media of medium temperature level and a flow segment (7) in which the desorber/adsorber compartments (2) liberate heat to heat transfer media with higher temperature level.

14. Sorption device according to one of the claims 1-10 for application as heat exchanger with heat-pipe effect, characterized by heat transfer media are cooled in flow segments (7) where the sorption vessel ends take up heat and flow segments (7) in which the sorption vessel ends liberate heat to heat transfer media which to be heated.

15. Sorption device according to one of the claims 1-10 for application as regenerative heat exchanger, characterized by a flow of heat transfer media through flow segments (7) where said flow is to be cooled by the heat uptake of the desorber/adsorber compartments (2) and where heat transfer media to be heated are directed through flow segments (7), where condenser/evaporator compartments (4) liberate heat in latter flow segments.

16. Method for operation of a sorption device according to one of the previons claims, characterized by movement of single flow segments (7) with respect to the others which results in modification of the temperatures of heat transfer media leaving the flow segments (7) and/or results in modification of the operation such that constant output temperatures of the heat transfer media or such that certain set points in the sorption vessel compartments are maintained.

## Revendications

1. Appareil à sorption avec au moins deux récipients à sorption (1) fermés et étanches aux gaz, composé de zones bouilleur-adsorbeur (2) remplies de sorbants, de zones condenseur-évaporateur (4), et d'un axe de rotation (6), autour duquel pivotent les récipients à sorption (1) qui, en même temps, traversent au moins deux segments de flux (7)
caractérisé par le fait
que les récipients à sorption (1) présentent une forme allongée dont une extrémité dispose d'une zone condenseur-évaporateur (4) et l'autre d'une zone bouilleur-adsorbeur (2), et que les récipients à sorption (1) sont disposés de telle façon que l'une des extrémités pivote à l'intérieur d'un premier dispositif de rotation (a), alors que l'autre pivote à l'intérieur d'un deuxième dispositif de rotation (b) qui n'est pas traversé par le premier dispositif de rotation (a), et que chacun des dispositifs de rotation est subdivisé en au moins deux segments de flux (7) qui, à chaque rotation, sont traversés, chacun une fois, par les extrémités des récipients à sorption (1), et dans chacun desquels il ne se produit qu'une seule adduction de chaleur ou une seule évacuation de chaleur au moyen d'un agent caloporteur.

2. Appareil à sorption selon revendication 1, caractérisé par le fait
que les récipients à sorption (1) présentent une position essentiellement radiale par rapport à l'axe de rotation (6).

3. Appareil à sorption selon revendication 1, caractérisé par le fait
que les récipients à sorption (1) présentent une position essentiellement axiale par rapport à l'axe de rotation (6).

4. Appareil à sorption selon revendication 1 ou 2, caractérisé par le fait
que l'axe de rotation (6) est logé horizontalement et que les segments de flux (7) servant à l'adduction et à l' évacuation de chaleur sont disposés latéralement et en face l'un de l'autre par rapport à l'axe de rotation (6).

5. Appareil à sorption selon une des revendications précédentes, caractérisé par le fait
que les sorbants employés sont des zéolithes, tels que Mg-A ou H-Y, ou des hydrures de métal.

6. Appareil à sorption selon une des revendications précédentes, caractérisé par le fait
que les faces extérieures des récipients à sorption (1) sont pourvues d'une matière desséchante.

7. Appareil à sorption selon une des revendications précédentes, caractérisé par le fait
que la rotation des récipients à sorption (1) s'effectue au moyen du moteur d'un ventilateur et par un engrenage.

8. Appareil à sorption selon une des revendications précédentes, caractérisé par le fait
qu'au moins un courant caloporteur traverse successivement ou simultanément plusieurs segments de flux (7).

9. Appareil à sorption selon une des revendications précédentes,

caractérisé par le fait

que deux segments de flux supplémentaires sont prévus pour le refroidissement ou le réchauffement des extrémités des récipients à sorption et que dans ces segments de flux (7) les extrémités des récipients à sorption échangent entre elles de la chaleur, au moyen de courants caloporteurs.

10. Appareil à sorption selon une des revendications précédentes,

caractérisé par le fait

que des courants caloporteurs à l'intérieur des segments de flux (7) sont conduits en direction opposée aux gradients thermiques des extrémités des récipients à sorption, qui tournent au passage.

11. Appareil à sorption selon une des revendications précédentes, à utiliser en tant qu'appareil de chauffage,

caractérisé par le fait

que des courants caloporteurs chauds sont amenés dans le segment de flux (7), dans lequel les zones bouilleur-adsorbeur (2) sont alimentées en chaleur et que les courants caloporteurs sortant des segments de flux (7), dans lesquels de la chaleur se dégage des zones condenseur-évaporateur (4), sont utilisés à des buts de chauffage.

12. Appareil à sorption selon une des revendications précédentes, à utiliser en tant qu'appareil de refroidissement,

caractérisé par le fait

que des agents caloporteurs chauds sont amenés dans le segment de flux (7), dans lequel les zones bouilleur-adsorbeur (2) sont alimentées en chaleur et que des courants caloporteurs sortant des segments de flux (7), dans lesquels de la chaleur est amenée aux zones condenseur-évaporateur (4), sont utilisés à des buts de refroidissement.

13. Appareil à sorption selon une des revendications 1 - 10, à utiliser en tant que transformateur de chaleur,

caractérisé par le fait

que les segments de flux (7), dans lesquels les extrémités des récipients à sorption reçoivent de la chaleur, sont alimentés par des agents caloporteurs de température moyenne, et que du segment de flux (7), dans lequel les zones bouilleur-adsorbeur (2) dégagent de la chaleur, sortent des courants de chaleur de haute température.

14. Appareil à sorption selon une des revendications 1 - 10, à utiliser en tant qu'échangeur de chaleur avec effet "Heat-Pipe",

caractérisé par le fait

que des courants caloporteurs à refroidir passent par les segments de flux (7), dans lesquels les extrémités des récipients à sorption reçoivent de la chaleur, et que des courants caloporteurs à chauffer passent par les segments de flux (7), dans lesquels les extrémités des récipients à sorption dégagent de la chaleur.

15. Appareil à sorption selon une des revendications 1 - 10, à utiliser en tant qu'échangeur de chaleur régénératif,

caractérisé par le fait

que des courants caloporteurs à refroidir passent par les segments de flux (7), dans lesquels les zones bouilleur-adsorbeur (2) reçoivent de la chaleur, et que des courants caloporteurs à chauffer passent par les segments de flux (7), dans lesquels les zones condenseur-évaporateur (4) dégagent de la chaleur.

16. Procédé de fonctionnement d'un appareil à sorption selon une des revendications précédentes,

caractérisé par le fait

qu'en déplaçant des segments de flux (7) isolés par rapport aux autres, les températures des courants caloporteurs sortant des segments de flux (7) sont maintenues, et/ou que le mode de fonctionnement des appareils à sorption est modifié de telle sorte que les températures de sortie constantes des courants caloporteurs ou certains points de fonctionnement des zones des récipients à sorption sont maintenus.

4   2   1

5   ARBEITSMITTELDAMPF   3

*Fig. 1.*

VERDAMPFEN   SORBIEREN   1   ABKÜHLEN

4   2   b

7

7   a

7

7   7   7

.6

7   7

7

7

ERWÄRMEN

KONDENSIEREN   KOCHEN   *Fig. 2.*

1

Fig.3.

LUFT

Fig.4.